Europäisches Patentamt

European Patent Office

Office européen des brevets

(19)

(11) Publication number: 0 213 479
A1

# (12) EUROPEAN PATENT APPLICATION

(21) Application number: 86111126.8

(22) Date of filing: 12.08.86

(51) Int. Cl.⁴: F16B 39/06

(30) Priority: 13.08.85 JP 123606/85

(43) Date of publication of application:
11.03.87 Bulletin 87/11

(84) Designated Contracting States:
DE FR GB IT NL

(71) Applicant: KITAMURA MACHINERY CO.,LTD.
1870 Toide-Komyoji
Takaoka-shi Toyama-ken(JP)

(72) Inventor: Kitamura, Koichiro
3-11-5 Ekinan, Takaoka-shi
Toyama-ken(JP)

(74) Representative: Patentanwälte Kohler -
Schwindling - Späth
Hohentwielstrasse 41
D-7000 Stuttgart 1(DE)

(54) Bolt.

(57) A fastening device includes a bolt (I) having a shank (3) and an external thread (4) formed at one end thereof and a nut (22) having an internal thread for enganging with the external thread (4) of the bolt (I), an internal taper thread (9) formed at said on end of the shank (3) along its axis, a male screw member (I0) having an external taper thread formed thereon for engaging with the internal taper thread (9) of the shank (3), and a slit (8) formed at said one end of the shank (3) in cooperation with the internal taper thread (9) so that said one end of the shank (3) can be enlarged in diameter so as to lock the nut (22) when the external taper thread of the male screw member (I0) engages with the internal taper thread - (9) of the shank (3).

Fig.5

# BOLT

## BACKGROUND OF THE INVENTION

This invention relates to a fastening device including a bolt and a nut with a locking mechanism.

Various locking nuts and bolts have been proposed to prevent nuts from loosing in operation. Examples of such locking nuts are disclosed in U.S.Pat. Nos. 3,198,230 and 2,464,729.

In the prior art, however, if heavy load is often applied onto a machine equiped with such nuts, or if a machine heavily vibrates, then loosing of nuts cannot be avoided.

In order to completely avoid loosing of such nuts, they are fixed to bolts by means of adhesives or welding. In such cases, the nuts cannot be disengaged or released.

## SUMMARY OF THE INVENTION

The object of this invention is to provide a fastening device including a bolt and a nut with a locking mechanism in which loosing of the nut can be avoided and the nut can be easily disengaged from the bolt if desired.

According to this invention, a fastening device inlcudes a new bolt and a conventional nut. The bolt includes a shank which has an internal taper thread at one end of the shank along its axis and at least one slit in cooperation with the internal taper thread whereby said one end of the shank can be enlarged in diameter so as to lock the nut. A male screw member has an external taper thread for engaging with the internal taper thread of the shank.

In a preferred mode of this invention, the internal taper thread of the shank is outwardly widened so that the male screw member can be easily set therein. The shank has a through-hole along its axis so as to guide a wrench for wrenching the nut. The through-hole extends through the full length of the shank.

In a typical example, a bolt has a shank, an external thread formed at one end thereof and a hexagon head fixed to the other end thereof. A through-hole is formed so as to extend through the full length of the shank and the head along its central axis. An internal taper thread is formed in said one end of the shank so as to engage with an external taper thread of a male screw member having one or two wrenching sockets of a hexagonal section in one end surface or both end surfaces thereof. Two opposite slits are formed in the external thread of the shank at said one end of the shank in cooperation with the internal taper thread thereof.

The hexagon head and/or the through-hole of the shank can be omitted.

## BRIEF DESCRIPTION OF THE DRAWINGS

Fig. l is a perspective view showing only an essential portion of a fastening device according to a first embodiment of this invention in a disassembled condition;

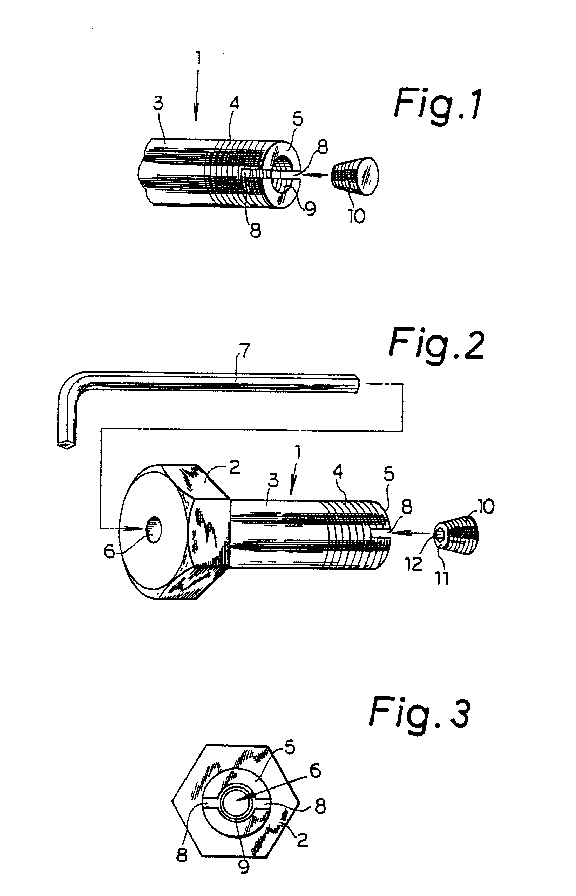

Fig. 2 is a perspective view of the fastening device shown in Fig. l;

Fig. 3 is an end view of the fastening device shown in Fig. l;

Fig. 4 is a partially sectional view of the fastening device shown in Fig. l, showing a condition in which a male screw member engages with an internal taper thread of a shank without a nut;

Fig. 5 is a sectional view of the fastening device shown in Fig. l, showing a condition in which it fastens two plates together; and

Fig. 6 is a perspective view showing a fastening device according to a second embodiment of this invention.

## DETAILED DESCRIPTION OF THE PREFERRED EMBODIMENTS

Referring to Figs. l to 5, a fastening device includes a bolt l having a hexagon head 2, an external thread 4 formed on one end thereof and a shank 3 fixed to the other end thereof. A through-hole 6 is formed in the bolt l along its central axis so as to extend from the head 2 to an end surface 5 through the bolt l in such a way that a wrenching means such as a L-shaped hexagon wrench 7 can be inserted into the through-hole 6 for the purpose of wrenching a male screw member l0.

Two parallel slits 8 are fomed in an end portion of the shank 3.

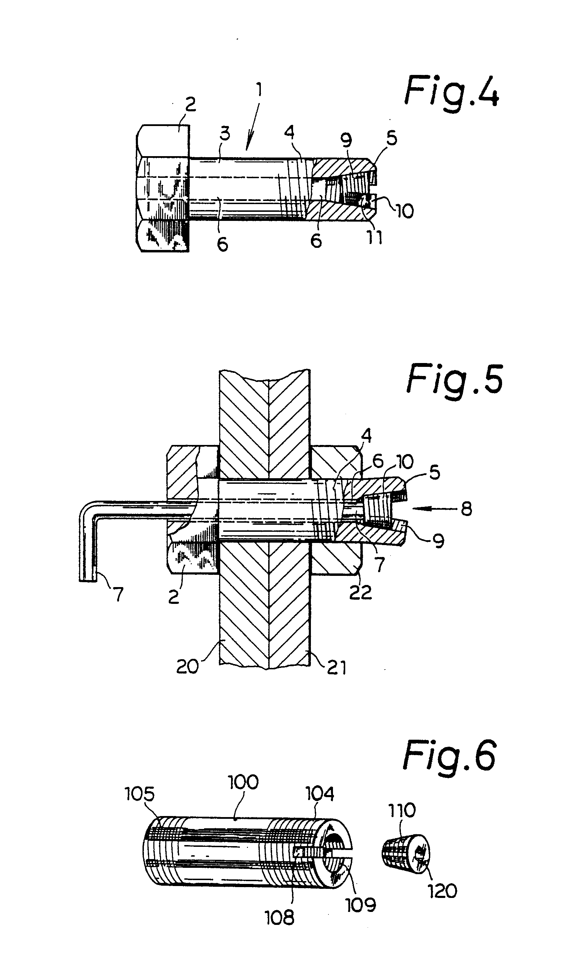

An internal taper thread 9 is formed in the end surface 5 of the shank 3 along its central axis so as to be joined to the through-hole 6. The internal taper thread 9 is preferably widened outwardly as best shown in Fig. 4.

The male screw member I0 has an external taper thread I0 for engaging with the internal taper thread 9 of the shank 3. A hexagonal socket I2 is formed in a small-diameter end II of the male screw member I0 for receiving a tip portion of the wrench 7. In the illustrated embodiment, the male screw member I0 has a right-hand thread.

In operation, the male screw member I0 is provisionally screwed with the internal taper thread 9 to a predetermined intermediate position in which the end portion of the shank 3 is not enlarged in diameter.

As shown in Fig. 5, the bolt I is inserted into openings of two plates 20, 2I. A nut 22 and a washer (not shown) are set. After that, the nut 22 is screwed with the extenal thread 4 of the shank 3 to a desired degree so that the two plates 20, 2I are tightened.

Finally, the wrench 7 is inserted into the through-hole 6 and then the wrenching socket I2 of the male screw member I0. By turning right-wards the wrench 7, the male screw member I0 moves inwardly toward the through-hole 6 whereby the internal taper thread 9 of the shank 3 cooperates with the slits 8 such that the end portion of the shank 3 is enlarged in diameter. Thus, the nut 22 is locked. If desired, the wrench 7 is again inserted through the through-hole 6 into the wrenching socket II of the male screw member I0 and turned left-wards. As a result, the end portion of the shank 3 returns to its original shape so that the nut 22 can be disengaged from the external thread 4 of the shank 3.

This invention is not limited to the above-stated embodiment. For example, the bolt can have any opening through which a wrench, driver or other means can be inserted. The through-hole 6 can be omitted. In such a case, a wrenching socket is formed in a large-diameter end of the male screw member I0 as shown in Fig. 6.

The head 2 can be omitted, for example, in case of a double-end stud as shown in Fig. 6. A shank I00 has a through-hole (not shown) along its central axis and two external threads I04, I05. A nut (not shown) is to engage with the external thread I4. An internal taper thread I09 is formed in one end of the shank I00 in cooperation with two opposite slits I08 formed therein. A male screw member II0 has an external taper thread for engaging with the internal taper thread I09 of the shank I00. The male screw member II0 has two wrenching sockets I20 in both large-diameter and small-diameter ends thereof.

In the embodiment of Fig. 6, the through-hole and the socket at the small-diameter end of the male screw member II0 can be omitted.

## Claims

I. A fastening device comprsing a bolt (I) having a shank (3, I00) and an external thread (4, I04) formed at one end thereof and a nut (22) having an internal thread for engaging with the external thread (4, I04) of the bolt (I), the improvement including:

an internal taper thread (9, I09) formed at said one end of the shank (3, I00) along its axis;

a male screw member (I0, II0) having an external taper thread formed thereon for engaging with the internal taper thread (9, I09) of the shank (3, I00); and

a slit (8, I08) formed at said one end of the shank - (3, I00) in cooperation with the internal taper thread (9, I09) so that said one end of the shank (3, I00) can be enlarged in diameter so as to lock the nut - (22) when the external taper thread of the male screw member (I0, II0) engages with the internal taper thread (9, I09) of the shank (3,I00).

2. A fastening device as defined in claim I, wherein the internal taper thread (9, I09) of the shank (3, I00) is outwardly widened.

3. A fastening device as defined in claim 2, wherein the shank (3, I00) has a through-hole (6) extending through the full length thereof along its axis for wrenching the male screw member (I0, II0).

4. A fastening device as defined in claim 3, wherein the male screw member (I0, II0) has a socket (I2) at a small-diameter end thereof for wrenching the male screw member (I0, II0) through the through-hole (6).

5. A fastening device as defined in claim 2, wherein the male screw member (II0) has a socket (I20) at a large-diameter end thereof for wrenching the male screw member (II0).

6. A fastening device as defined in claims 2, wherein the male screw member (I0, II0) has a socket (I2, I20) at each of opposite ends thereof for wrenching it.

7. A fastening device as defined in claim 2, wherein the bolt (I) is a double-end stud.

8. A fastening device as defined in claim 3, wherein the bolt (I) has a head (2) fixed to the shank (3), the through-hole (6) extending through the head (2).

9. A fastening device as defined in claim I, wherein the shank (3, I00) has plural slits (8).

*Fig.1*

*Fig.2*

*Fig.3*

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH - A5 - 569 202 (HANS GUGGEN-HEIM)<br><br>* Totality * | 1,3-6, 8,9 | F 16 B 39/06 |
| D,A | US - A - 3 198 230 (JORDAN H. STOWER)<br><br>* Claim 1; fig. 1,4 * | 1 | |
| D,A | US - A - 2 464 729 (JORDAN H. STOWER)<br><br>* Columns 1-3; claim 1; fig. 10-16 * | 1 | |
| A | US - A - 3 939 889 (BOGDAN BEREZ-NICKI)<br><br>* Abstract * | 1 | |

TECHNICAL FIELDS SEARCHED (Int. Cl.4)

F 16 B

The present search report has been drawn up for all claims

| Place of search | Date of completion of the search | Examiner |
|---|---|---|
| VIENNA | 13-10-1986 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82